# EUROPÄISCHE PATENTANMELDUNG

(11) **EP 1 209 138 A1**
(43) Veröffentlichungstag der Anmeldung: **29.05.2002**
(21) Anmeldenummer: 01124535.4
(22) Anmeldetag: 12.10.2001
(51) Int. Cl.: C05F 17/02

(54) **Rottemiete mit Adsorptionsmittelbahn**

(30) Priorität: 28.11.2000 DE 10059031
(71) Anmelder: Faber Recycling GmbH, 55483 Schlierschied (DE)
(72) Erfinder: Faber, Karl Wilhelm, 55232 Alzey (DE)
(74) Vertreter: Grünecker, Kinkeldey, Stockmair & Schwanhäusser Anwaltssozietät

(57) **Zusammenfassung**

Die Erfindung betrifft ein Verfahren und eine Vorrichtung zur mechanischen biologischen Abfallbehandlung, wobei der Abfall zunächst homogenisiert, zerkleinert und durchfeuchtet wird und danach seine biologische Behandlung in einer aeroben, durch das Kaminzugverfahren belüfteten Rottemiete erfolgt.

Um die Schadstoffemission der Rottemiete zu reduzieren, wird die Oberfläche der Rottemiete mit mindestens einer Adsorptionsmittelbahn abgedeckt.

## Beschreibung

Die Erfindung betrifft ein Verfahren zur mechanisch biologischen Abfallbehandlung, wobei der Abfall zunächst homogenisiert, zerkleinert und durchfeuchtet wird und danach seine biologische Behandlung in einer aeroben, durch das Kaminzug-Verfahren belüfteten Rottemiete erfolgt.

Die Erfindung betrifft weitere eine Rottemiete zur biologischen Abfallbehandlung von zerkleinertem, homogenisiertem und durchfeuchtetem Abfall, der auf einem luftdurchlässigen Material gelagert wird, durch das Belüftungselemente geführt sind, durch die Luft von außen nach dem Kaminzugverfahren zu einem in der Rottemiete angeordneten Kamin zur Belüftung des Abfalls gezogen wird sowie einer Vorrichtung zur biologischen Abfallbehandlung mit einer solchen Rottemiete.

Ein solches Verfahren und eine derartige Rottemiete finden bereits in modernen Deponiebetrieben ihre Anwendung. Dabei wird zunächst der Restmüll, wie beispielsweise Hausmüll, Sperrmüll, hausmüllähnlicher Gewerbemüll und Klärschlamm einer Eingangskontrolle unterzogen, wobei grober Wert und Störstoffe aussortiert werden. Danach erfolgt eine mechanische Vorbehandlung, wobei der Abfall gegebenenfalls unter Zusatz von Klärschlamm oder Sickerwasser beispielsweise in Mischern zerkleinert, homogenisiert und durchfeuchtet wird. Die biologische Behandlung erfolgt dann in aeroben Mieten über einen Zeitraum von mindestens neun Monaten, die durch das sogenannte Kaminzugverfahren belüftet werden. Bei den bekannten Rottemieten ist der Abfall auf luftdurchlässigem Material, vorzugsweise Holzpaletten, gelagert, die schräg übereinander oder versetzt aufeinander gelagert sind, so dass Belüftungselemente unter den Paletten durchgeführt werden können. Auf den Abfall wird eine Biofilterschicht aufgebracht. Auch aus der DE 19 804 018.0 ist bereits ein Verfahren und eine Rottemiete zur mechanisch biologischen Abfallbehandlung bekannt, wobei die Biofilterschicht aus einer Strukturschicht von Teilchen einer Teilchengröße von 25 bis 80 mm und einer darauf aufgebrachten Abdeckschicht besteht.

Bei derartigen Rottemieten entstehen beim aeroben Abbau des Abfalls Gase, die Schadstoffe enthalten können, und die nach oben aus der Rottemiete entweichen. So kommt es, dass die zuvor beschriebenen Rottemieten den immer höher werdenden Anforderungen der Emissionsschutzverordnungen nicht mehr gerecht werden.

Ausgehend von diesem Stand der Technik liegt der vorliegenden Erfindung die Aufgabe zugrunde, ein Verfahren sowie eine Rottemiete mit reduzierter Schadstoffemission bereitzustellen.

Erfindungsgemäß wird diese Aufgabe mit einem Verfahren der eingangs genannten Art dadurch gelöst, dass die Oberfläche der Rottemiete mit mindestens einer Adsorptionsmittelbahn abgedeckt wird. Das auf der Oberfläche der Rottemiete angeordnete Adsorptionsmaterial adsorbiert an seiner Oberfläche Schadstoffe des beim aeroben Abbau des Abfalls entstehenden aufsteigenden Gases. Trotz der Rückhaltefähigkeit des Adsorptionsmittels ist die Belüftung der Miete gewährleistet. Somit kann die Schadstoffemission der Rottemiete erheblich reduziert werden. Die Adsorptionsmittelbahn verhindert zusätzlich die Geruchs- und Staubemission und bietet einen zusätzlichen Schutz der Rottemiete vor dem Auskühlen. Die Verwendung von Aktivkohle als Adsorptionsmittel ist kostengünstig und einfach.

Zwischen der Adsorptionsmittelbahn und dem Abfall kann eine Biofilterschicht gebildet werden, wobei zur Erzeugung der Biofilterschicht auf die Abfälle eine Strukturschicht aus Teilchen einer Teilchengröße von 25 bis 80 mm und darauf eine Abdeckschicht aufgebracht werden kann. Eine derartige Strukturierung der Biofilterschicht erlaubt es, dass auch nach längerer Zeit feine Belüftungskanäle verbleiben, durch die die Rottemiete atmen kann. Eine solche Biofilterschicht gewährleistet eine dauerhafte Belüftung der Rottemiete, was insbesondere auch in Kombination mit den Adsorptionsmittelbahnen notwendig ist, so dass es zu einer ausreichenden Belüftung der Rottemiete kommt.

Die Rottemieten werden nicht über den gesamten Zeitraum, der für den biologischen Abbau notwendig ist, mit der Adsorptionsmittelbahn abgedeckt, sondern die Rottemiete verbleibt etwa nur 4 bis 6 Wochen auf der Rottemiete. In diesem Zeitraum ist bereits die Hauptschadstoffemission erfolgt. Danach ist keine weitere Abdeckung der Rottemiete mit einer Adsorptionsmittelbahn notwendig. Die nach 4 bis 6 Wochen von der Rottemiete entfernte Adsorptionsmittelbahn kann dann für eine andere Rottemiete verwendet werden. Das Wiederverwenden der gebrauchten Adsorptionsmittelbahnen ist umweltfreundlich und darüber hinaus kostensparend.

Im Kaminbereich der Rottemiete wird die Rottemiete mit einer mehrfachen Lage der Adsorptionsmittelbahn abgedeckt. Insbesondere wird die Rottemiete im Kaminbereich mit einer vierfachen Lage der Adsorptionsmittelbahn abgedeckt. Somit wird sichergestellt, dass auch im Kaminbereich, wo es aufgrund des Kaminzugverfahrens zu einer erhöhten Schadstoffemission kommt, die Schadstoffe ausreichend adsorbiert werden.

Gemäß einer bevorzugten Ausführungsform der vorliegenden Erfindung wird die mit der Aktivkohlebahn abgedeckte Rottemiete in einer geschlossenen Halle aufgebaut. Somit werden Schadstoffe, die eventuell durch die Aktivkohlebahn durchtreten, nicht nach außen geleitet. Es ist vorteilhaft, wenn in der geschlossenen Halle, die beim aeroben Abbau des Abfalls entstehenden aufsteigenden Gase an der Decke abgesaugt werden und von dort über Rohrleitungen wieder unter die Miete geführt werden. Somit dienen die aus der Rottemiete aufsteigenden Gase zur erneuten Belüftung der Rottemiete. Durch diesen Kreislauf wird gewährleistet, dass die aus der Rottemiete austretenden Gase mehrfach durch die Aktivkohlebahn hindurchtreten, so dass eine ausreichende Filterung der Gase gewährleistet ist. Das Abführen der Luft aus der Halle erfolgt über einen an der Halle angebrachten Schornstein, wobei die über den Schornstein abgeführte Luft weiter mit Aktivkohle nachgereinigt werden kann.

Die erfindungsgemäße Rottemiete ist dadurch gekennzeichnet, dass die Oberfläche der Rottemiete von einer Adsorptionsmittelbahn gebildet ist. Bevorzugte Ausführungsbeispiele sind in den Unteransprüchen gezeigt.

Die Erfindung soll nachfolgend unter Zuhilfenahme der folgenden Figuren beschrieben werden. Dabei zeigt:
- Fig. 1: einen schematischen Querschnitt einer erfindungsgemäßen Rottemiete.
- Fig. 2: einen schematischen Querschnitt durch einen Ausschnitt der Holzpaletten.
- Fig. 3: einen Schnitt durch eine Halle, in der die erfindungsgemäße Rottemiete aufgebaut ist und
- Fig. 4: einen Schnitt entlang der Linie A-A in Fig. 3.

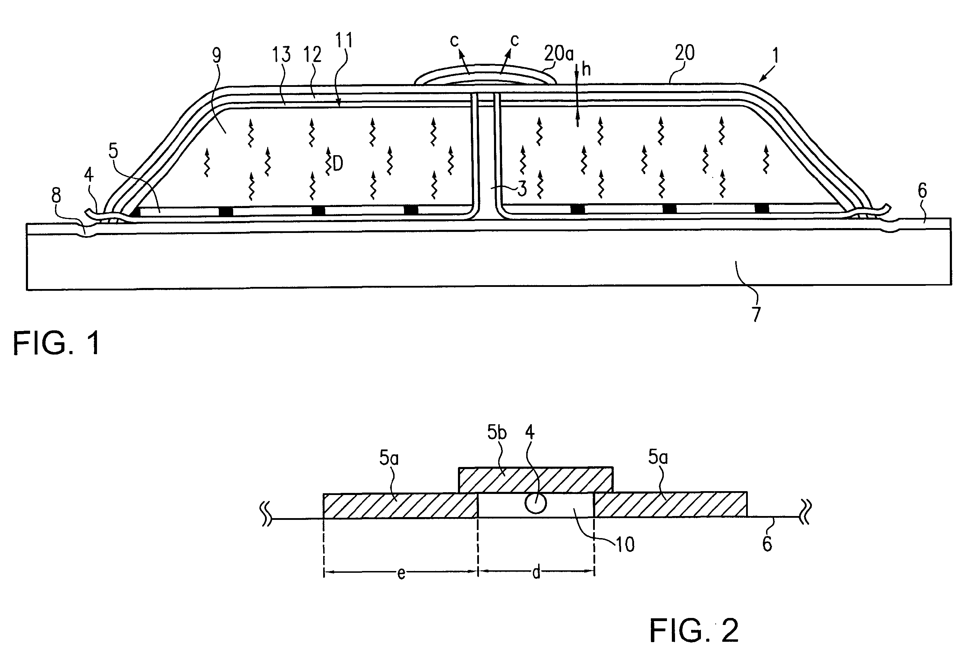

Wie dem schematischen Querschnitt der erfindungsgemäßen Rottemiete in Fig. 1 zu entnehmen ist, ist auf dem Untergrund 7 eine befestigte entwässerbare Fläche 6 angeordnet, die darüber hinaus Ablaufmulden 8 für Stauwasser aufweist. Auf dieser befestigten Fläche 6 ist luftdurchlässiges Material, in diesem Ausführungsbeispiel Holzpaletten 5, angeordnet. Die Paletten sind wie in Fig. 2 gezeigt angeordnet, wobei jeweils zwei Paletten 5a unter einem Abstand d nebeneinander auf der befestigten Fläche 6 unter einem Abstand d angeordnet sind. Über den Paletten 5a liegt eine weitere Palette 5b auf, so dass ein Hohlraum 10 entsteht, durch den ein oder mehrere Belüftungselemente 4, in diesem Ausführungsbeispiel ein geschlitztes PVC Rohr, durchgeführt werden können. Die Anordnung der Paletten bzw. der Aufbau der gesamten Rottemiete kann so erfolgen, wie beispielsweise in der DE 19 804 018.0 beschrieben ist. Über den Paletten wird der Abfall 9 gelagert. In der Mitte der Rotte sind Belüftungselemente 4 nach oben geführt und bilden so einen Kamin 3.

Auf dem Abfall 9 ist die Biofilterschicht 11 angeordnet, deren Höhe h ca. 30 cm beträgt. Diese Biofilterschicht ist zweischichtig aufgebaut. Die untere, auf Seiten des Abfalls 9 liegende Schicht ist eine Strukturschicht, die bevorzugt aus Kompostsiebresten eines Kompostwerks besteht und Teilchen einer Teilchengröße von 25 bis 80 mm aufweist. Diese Teilchen sollen strukturfeste Teilchen sein, die beim Ausschütten luftdurchlässige Kanäle bilden, so dass eine Atmung der Rottemiete durch diese Strukturschicht 13 hindurch möglich ist. Die ca. 15 cm hohe Strukturschicht wird dann durch die darüber liegende Abdeckschicht 12 abgedeckt. Zur Erzeugung der Abdeckschicht wird ein Teil der aus den Abfällen herausgesiebten Fraktion < 60 mm verwendet. Strukturschicht 13 und Abdeckschicht 12 bilden zusammen die Biofilterschicht. Die Biofilterschicht sorgt für das Beibehalten der Atmungsaktivität ohne dass ein Auskühlen der Rottemiete erfolgen kann. Die Rottemiete ist an ihrer Oberfläche mit mindestens einer Adsorptionsmittelbahn 20 abgedeckt. In diesem Ausführungsbeispiel dient eine Aktivkohlebahn 20 als Adsoptionsmittelbahn. Es können jedoch auch andere geeignete Adsorptionsmittel, wie z.B. Tenax eingesetzt werden. Die Aktivkohlebahn weist eine Dicke von 2,5 mm auf und eine Masse von 335 g/m². Die Aktivkohlebahn umfasst die Aktivkohle und ein Gewebe, das die Aktivkohle hält. Die Aktivkohlebahn 20 bedeckt die gesamte Oberfläche der Rottemiete 1. Somit müssen die beim aeroben Abbau des Abfalls entstehenden aufsteigenden Gase, die durch die Pfeile D gezeigt sind, die Aktivkohlebahn 20 passieren, bevor sie nach außen treten. Die Aktivkohle der Aktivkohlebahn 20 adsorbiert an ihrer Oberfläche die in den nach oben aufsteigenden Gasen enthaltenden Schadstoffe, ohne jedoch die Atmungsaktivität der Rottemiete 1 zu beeinträchtigen. Somit kann die Schadstoffemission der Rottemiete 1 wesentlich reduziert werden. Im Bereich des Kamins 3, wo es zu einer erhöhten Schadstoffemission kommt, wird die Rottemiete mehrlagig mit der Aktivkohlebahn 20 abgedeckt, in diesem Ausführungsbeispiel wird sie vierfach abgedeckt, um sicherzustellen, dass die austretenden Schadstoffe ausreichend adsorbiert werden.

Bei einem Verfahren zur mechanischen biologischen Abfallbehandlung wird, nachdem der Müll, wie er im Haushalt anfällt, oder Siedlungsabfälle, einer Eingangskontrolle unterzogen worden sind und grobe Wert- und Störstoffe entfernt worden sind, dieser mechanisch vorbehandelt, indem er beispielsweise in einem Mischer homogenisiert und zerkleinert und gegebenenfalls unter Zusatz von Klärschlamm oder Sickerwasser durchfeuchtet wird, so dass er optimal für die nachfolgende biologische Behandlung aufgeschlossen ist.

Die biologische Behandlung erfolgt dabei in einer Rottemiete wie sie in Fig. 1 dargestellt ist. Als Unterlage für den Abfall dienen Holzpaletten, auf die der Abfall 9 abgelagert wird. Durch die Holzpaletten werden Belüftungselemente 4, bevorzugt geschlitzte PVC Rohre gezogen, die über ihre Länge Luft von unten in die Rottemiete 1 eintragen, die dann nach oben steigt. Durch diese Belüftung kann ein aerober Abbau des Abfalls 9 stattfinden. Da sich die Rottemiete dabei insgesamt erwärmt, zieht sie Luft von außen über die Belüftungselemente 4 nach. Die sich erwärmte Luft steigt nach oben und kann über dem Kamin 3 und durch die mehrfachen Aktivkohlebahnen 20 hindurch nach außen treten. Durch diese Funktion wird eine gleichmäßige Durchlüftung des Abfalls 9 sichergestellt. Auf den Abfall 9 wird dann die Biofilterschicht 12, 13 aufgebracht. Auf die Biofilterschicht 12, 13 wird schließlich die Aktivkohlebahn 20 aufgelegt. Beim aeroben Abbau des Abfalls entstehende Gase, wie durch die Pfeile D gezeigt, steigen nach oben auf, und passieren die Aktivkohlebahn 20 bevor sie nach außen treten, auch Wasserdampf entsteht dabei.

Durch die erfindungsgemäße Biofilterschicht 12, 13 wird der Wasserdampf zum Teil zurückgehalten. Schadstoffe, die in den von der Rottemiete 1 nach außen tretenden Gase enthalten sind, werden von der Oberfläche der Aktivkohle der Aktivkohlebahn 20 adsorbiert. Nach etwa 4 bis 6 Wochen wird die Aktivkohlebahn 20 von der Rottemiete 1 entfernt, da in diesem Zeitraum bereits die Hauptschadstoffemission erfolgt ist. Die entfernte Aktivkohlebahn 20 kann dann für eine andere Miete, die frisch aufgesetzt wurde, wieder verwendet werden. Nachdem sich über Monate, z.B. 9 Monate, hinziehenden Prozess der Verrottung kann eine Abtrennung der heizwertreichen Fraktionen erfolgen. Die andere Fraktion kann dünnschichtig auf einer Deponie abgelagert werden.

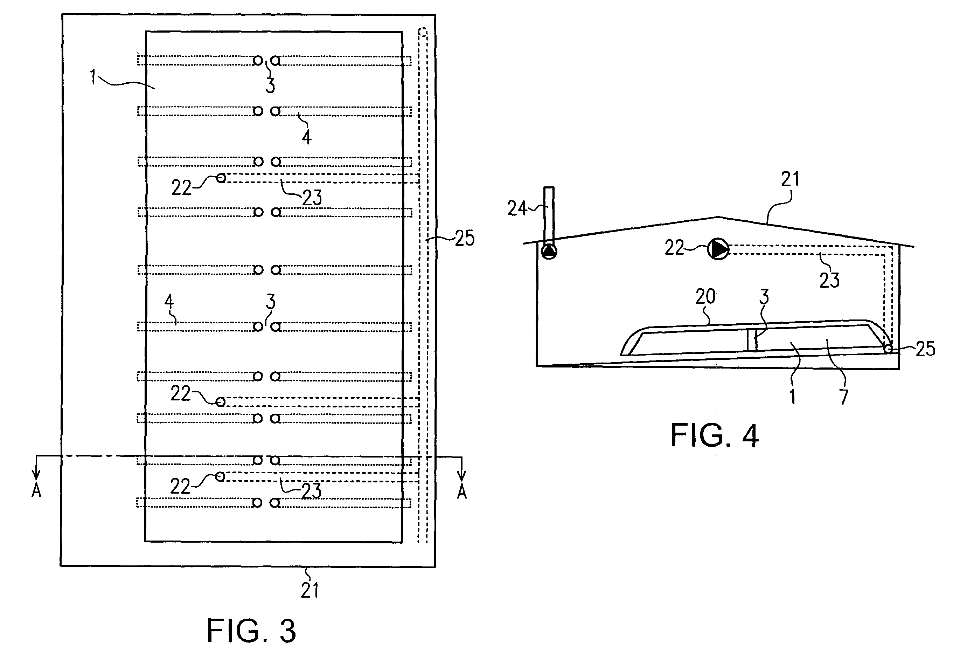

Gemäß einem bevorzugten Ausführungsbeispiel wird die in Fig. 1 gezeigte erfindungsgemäße Rottemiete 1 in einer Halle 21 aufgebaut. Wie aus Figur 3 ersichtlich ist, weist die gesamte Rottemiete 1 mehrere Bereiche mit entsprechenden Belüftungsrohren 4 und mehreren Kaminbereichen 3 auf, die nacheinander aufgetragen wurden. Dabei ist, wie die Fig. 4 zeigt, die Rottemiete 1 auf einem abfallenden Untergrund 7 schräg aufgebaut. Die Rottemiete ist deshalb auf einem abschüssigen Untergrund aufgebaut, dass Stauwasser ablaufen kann. Die Oberfläche der Rottemiete 1 ist durch Aktivkohlebahnen 20 abgedeckt. An der Decke der Halle ist mindestens eine Absaugung 22 angeordnet, die beim aeroben Abbau des Abfalls entstehende aufsteigende Gase, die aus der Rottemiete 1 ausgetreten sind, abgesaugt. Von dort wird die Abluft über Rohrleitungen 23 zu einem Verteilersystem 25 geleitet, das sich am Hallenboden befindet. Von dort wird die Abluft, wieder unter die Miete 1 geführt. Die Abluft wird insbesondere wieder in die Belüftungselemente 4 zur Belüftung der Rottemiete 1 geführt. Somit entsteht ein Kreislauf, der gewährleistet, dass die Abluft aus den Rottemieten 1 die Aktivkohlebahn 20 mehrfach passiert, so dass eine ausreichende Reinigung der Abluft der Rottemieten 1 gewährleistet wird. Somit kann die Schadstoffemission in der Rottemieten 1 noch weiter reduziert werden. Die Abführung der Luft aus der Halle erfolgt über einen seitlich an der Halle 21 angebrachten Schornstein 24. In diesem Schornstein 24 kann gegebenenfalls eine Nachreinigung der Abluft mit Aktivkohle vorgenommen werden.

## Patentansprüche

1. Verfahren zur mechanischen biologischen Abfallbehandlung, wobei der Abfall zunächst homogenisiert, zerkleinert und durchfeuchtet wird und danach seine biologische Behandlung in einer aeroben, durch das Kaminzugverfahren belüfteten Rottemiete (1) erfolgt, **dadurch gekennzeichnet, dass** die Oberfläche der Rottemiete (1) mit mindestens einer Adsorptionsmittelbahn (20) abgedeckt wird.

2. Verfahren nach Anspruch 1, **dadurch gekennzeichnet, dass** die Adsorptionsmittelbahn (20) eine Aktivkohlebahn ist.

3. Verfahren nach Anspruch 1 oder 2, **dadurch gekennzeichnet, dass** zwischen dem Abfall und der Aktivkohlebahn (2) eine Biofilterschicht (13, 12) gebildet wird.

4. Verfahren nach Anspruch 3, **dadurch gekennzeichnet, dass** zur Erzeugung der Biofilterschicht auf die Abfälle eine Strukturschicht aus Teilchen einer Teilchengröße von 25 bis 80 mm und darauf eine Abdeckschicht aufgebracht wird.

5. Verfahren nach mindestens einem der Ansprüche 1 bis 4, **dadurch gekennzeichnet, dass** die Rottemiete (1) vier bis sechs Wochen von der Adsorptionsmittelbahn 20 abgedeckt bleiben.

6. Verfahren nach mindestens einem der vorhergehenden Ansprüche, **dadurch gekennzeichnet, dass** die Rottemiete (1) im Kaminbereich (3) mit einer mehrfachen Lage der Adsorptionsmittelbahn abgedeckt wird.

7. Verfahren nach Anspruch 6, **dadurch gekennzeichnet, dass** die Rottemiete (1) mit einer vierfachen Lage der Adsorptionsmittelbahn abgedeckt werden.

8. Verfahren nach mindestens einem der vorhergehenden Ansprüche, **dadurch gekennzeichnet, dass** nachdem die Adsorptionsmittelbahn von der Rottemiete (1) entfernt worden ist, diese für eine weitere Rottemiete verwendet wird.

9. Verfahren nach mindestens einem der vorhergehenden Ansprüche, **dadurch gekennzeichnet, dass** die mit den Adsorptionsmittelbahnen abgedeckten Rottemieten (1) in einer geschlossenen Halle (21) aufgebaut sind.

10. Verfahren nach Anspruch 9, **dadurch gekennzeichnet, dass** in der geschlossenen Halle (21) beim aeroben Abbau des Abfalls entstehende aufsteigende Gase an der Decke abgesaugt werden und von dort über Rohrleitungen wieder unter die Rottemiete geführt werden.

11. Verfahren nach Anspruch 10, **dadurch gekennzeichnet, dass** das Abführen der Luft aus der Halle über einen an der Halle angebrachten Schornstein (24) erfolgt.

12. Verfahren nach Anspruch 11, **dadurch gekennzeichnet, dass** die über den Schornstein abgeführte Luft mit Aktivkohle nachgereinigt wird.

13. Rottemiete zur biologischen Abfallbehandlung von zerkleinertem, homogenisiertem und durchfeuchtetem Abfall (9), der auf einem luftdurchlässigen Material (5) gelagert wird, durch das Belüftungselemente (4) geführt sind, durch die Luft von außen nach dem Kaminzugverfahren zu einem in der Rottemiete (1) angeordneten Kamin (3) zur Belüftung des Abfalls (9) gezogen wird, **dadurch gekennzeichnet, dass** die Oberfläche der Rottemiete von einer Adsorptionsmittelbahn 20 gebildet ist.

14. Rottemiete nach Anspruch 13, **dadurch gekennzeichnet, dass** die Adsorptionsmittelbahn (20) eine Aktivkohlebahn ist.

15. Rottemiete nach Anspruch 13 oder 14, **dadurch gekennzeichnet, dass** zwischen dem Abfall und der Adsorptionsmittelbahn (20) eine Biofilterschicht (12, 13) gebildet ist.

16. Rottemiete nach Anspruch 15, **dadurch gekennzeichnet, dass** die Biofilterschicht aus einer auf dem Abfall aufgebrachten Strukturschicht (13) von Teilchen einer Teilchengröße von 25 bis 80 mm und einer darauf aufgebrachten Abdeckschicht (12) besteht.

17. Rottemiete nach einem der Ansprüche 13 bis 16, **dadurch gekennzeichnet, dass** die Rottemiete (1) im Kaminbereich 3 mit einer mehrfachen Lage derAdsorptionsmittelbahn (20) abgedeckt ist.

18. Rottemiete nach Anspruch 17, **dadurch gekennzeichnet, dass** die Rottemiete im Kaminbereich (3) mit einer vierfachen Lage der Adsorptionsmittelbahn (20) abgedeckt ist.

19. Rottemiete nach mindestens einem der Ansprüche 12 bis 16, **dadurch gekennzeichnet, dass** die Adsorptionsmittelbahn (20) eine Dicke von 1 - 10 mm aufweist.

20. Rottemiete nach Anspruch 18, **dadurch gekennzeichnet, dass** die Adsorptionsmittelbahn eine Dicke von 2, 5 mm aufweist.

21. Vorrichtung zur biologischen Abfallbehandlung mit mindestens einer Rottemiete (1) gemäß einem der Ansprüche 13 bis 20 und mit einer geschlossenen Halle (21), in der die Rottemiete (1) aufgebaut ist.

22. Vorrichtung nach Anspruch 21, **dadurch gekennzeichnet, dass** die Halle an der Decke eine Luftabsaugung (22) aufweist zum Absaugen der beim aeroben Abbau des Abfalls entstehenden aufsteigenden Gase.

23. Vorrichtung nach Anspruch 22, **dadurch gekennzeichnet, dass** die Absaugung (22) mit Rohrleitungen (23, 25) verbunden ist, die so angeordnet sind, dass die abgesaugte Abluft wieder unter die Rottemiete (1) geführt wird.

24. Vorrichtung nach Anspruch 23, **dadurch gekennzeichnet, dass** die Abluft in die Belüftungselemente (4) geführt wird.

25. Vorrichtung nach einem der Ansprüche 20 bis 24, **dadurch gekennzeichnet, dass** die Halle einen Kamin (24) aufweist, zum Abführen von Luft aus der Halle (21).

26. Vorrichtung nach Anspruch 25, **dadurch gekennzeichnet, dass** der Kamin (24) der Halle (21) einen Nachreinigungseinrichtung aufweist.

27. Vorrichtung nach Anspruch 26, **dadurch gekennzeichnet, dass** die Nachreinigungseinrichtung Aktivkohle umfasst.
